# EUROPÄISCHE PATENTSCHRIFT

(11) **EP 0 635 130 B1**
(45) Veröffentlichungstag und Bekanntmachung des Hinweises auf die Patenterteilung: **24.06.1998**
(21) Anmeldenummer: 94906842.3
(22) Anmeldetag: 07.02.1994
(51) Int. Cl.: G01N 31/12, F27B 17/02

(54) **TRAGBARE ANALYSEVORRICHTUNG FÜR THERMISCHE ANALYSEN**
PORTABLE THERMAL ANALYSIS DEVICE
DISPOSITIF PORTATIF POUR ANALYSES THERMIQUES

(30) Priorität: 08.02.1993 DE 9301704 U
(43) Veröffentlichungstag der Anmeldung: 25.01.1995
(73) Patentinhaber: PALOCZ-ANDRESEN, Michael, D-20459 Hamburg (DE)
(72) Erfinder: PALOCZ-ANDRESEN, Michael, D-20459 Hamburg (DE)
(86) Internationale Anmeldenummer: DE9400120
(87) Internationale Veröffentlichungsnummer: WO9418556

(56) Entgegenhaltungen:
- GB-A- 2 116 321
- GB-A- 2 153 056
- US-A- 3 752 643
- PATENT ABSTRACTS OF JAPAN vol. 9, no. 50 (P-339) 5. März 1985 & JP,A,59 188 554 (NIPPON DENKI KK) 25. Oktober 1984

## Beschreibung

In der Analysentechnik, insbesondere zur Erfassung leichtflüchtiger Substanzen oder zur Schwermetallbestimmung sind elektrisch beheizte Analysevorrichtungen in Form von Öfen bekannt. Diese Öfen zeichnen sich durch eine sperrige Bauweise, hohes Gewicht und eine langsame Arbeitsweise aus. Sie können demnach nur stationär im Laborbereich eingesetzt werden. Für manche Einsatzbereiche, insbesondere im Umweltbereich, ist es jedoch wichtig, daß Analysen von Boden-, Wasser-, Abwasser- oder Luftproben möglichst an Ort und Stelle vorgenommen werden, da durch die Durchführung der Analyse an der unmittelbaren Probeentnahmestelle Analysefehler, die hauptsächlich durch die Probenkonservierung und Transport entstehen, vermindert werden.

In der Fachliteratur sind Patente bekannt, die als Gegenstand ebenfalls thermische Vorrichtungen beschreiben. In der Patentanmeldung D2 wird eine analytische Vorrichtung beschrieben, in der um einen elektrisch beheizten Ofen verschiedene Probenbehälter untergebracht werden können. Die Proben werden auf einer Arbeitsplatte angeordnet und mechanisch bewegt, um sie in die für die Analyse notwendige Position zu bringen.

Dieser Ofen ist ein Laborgerät und ist nicht geeignet, ohne Netzanschluß, leicht tragbar eingesetzt zu werden. Die Heizstäbe in der Vorrichtung von D2 müssen je nach Bedarf unbegrenzt elektrische Energie erhalten, um z. B. bei Veraschungsversuchen die Oxidation voll zu ermöglichen.

In D1 wird ein gasbeheizter Töpferofen beschrieben, in dem keramische Gefäße gebrannt werden können. Die Ausführung des Verbrennungssystems in D1 weicht jedoch stark von dem in der vorliegenden Anmeldung beschriebenen Mikroofen ab und ermöglicht nicht die für analytische Zwecke geforderte Genauigkeit bei der Feuerführung.

Aufgabe der vorliegenden Erfindung ist es, eine Analysevorrichtung zu entwickeln, welche die Durchführung von thermischen Analysen an jedem beliebigen Ort erlaubt, vorzugsweise an den Probenentnahmestellen.

Diese Aufgabe ist durch die im Anspruch 1 angegebene Analysevorrichtung gelöst. Die Unteransprüche stellen vorteilhafte Weiterbildungen dar.

Durch die angegebene Vorrichtung ist die Speicherung einer großen Energiedichte auf kleinstem Raum möglich. Durch die leichte, einfache Ausführungsform der Vorrichtung ist nicht nur ein minimales Volumen, sondern auch ein geringes Gewicht erreicht. Mit der erfindungsgemäßen Vorrichtung können fast alle festen Substanzen, wie Boden oder Schlamm, flüssige Substanzen, wie Wasser und Abwasser, und gasförmige Medien, wie Luftgase oder Abgase, analysiert werden. Insbesondere eignet sich die erfindungsgemäße Vorrichtung zur Bestimmung von TOC und Durchführung von Aufschlußverfahren, wie z.B. Aufschluß von metall- oder schwermetallhaltigen Wasser- oder Schlammproben. Desweiteren kann die Bestimmung des chemischen Sauerstoffgehaltes und des gesamten Stickstoffes sowie der Phosphat- und Phosphorkonzentration in Proben bestimmt werden. Ferner können mittels der Analysevorrichtung Verdrängungsverfahren zur Erfassung leichtflüchtiger Substanzen durchgeführt werden, wie z.B. Bestimmung der Kohlenwasserstoffkonzentration in wässrigen und festen Proben, sowie Erfassung des flüchtigen Schwefels in diesen Proben. Es können auch Oxidationsreaktionen für die Bestimmung des gesamten organischen Kohlenstoffs oder des gesamten Stickstoffes oder der flüchtigen Schwefelkonzentration durchgeführt werden. Diese Untersuchungen finden bei Temperaturen bis 850°C statt.

Die erfindungsgemäße tragbare Analysevorrichtung weist einen in einem Gehäuse angeordneten Ofen auf. Der Ofen befindet sich in einem Verbrennungsschacht des Gehäuses. Die Wandungen des Ofens sind aus einem feuerfesten Baustein, vorzugsweise einem unter Vakuum verformten, aus mineralischen Fasern hergestellten Leichtbaustein. In den Ofen sind Reaktorgefäße mit Probenmaterial einsetzbar. Weiterhin ist eine geregelte Wärmezufuhrvorrichtung zur gleichmäßigen Erwärmung der Reaktorgefäße und damit zur Durchführung von thermischen Analysen vorhanden.

Der Ofen ist mit einer Isolierung versehen. Die Isolierung besteht aus einem unbrennbaren, mineralischen Material (z.B. Steinwolle), welches bis etwa 1.500°C hitzebeständig ist. Die Isolierung ist außenseitig vorteilhafterweise durch eine Schicht aus dünnem Aluminiumblech oder Streckmetall umgeben Darüberhinaus ist an der Außenseite des Ofens ein an seinem Umfang angeordnetes und von dem Ofenmantel beabstandetes Berührungsschutzgitter angeordnet, welches Verbrennungen bei versehentlichem Berühren des Ofenmantels vermeidet. Ein Abstand von 8 - 18mm zwischen dem Aluminiummantel und dem Gitter ist ausreichend.

Die mit Probenmaterial gefüllten Reaktorgefäße werden in den Ofenraum eingeführt und auf die zur Durchführung der Analyse erforderlichen Temperatur erhitzt.

Der Ofen kann in der Analysevorrichtung vertikal oder horizontal angeordnet werden. Vertikal angeordnete Öfen werden in einen vertikal verlaufenden Verbrennungsschacht eingesetzt, horizontal angeordnete Öfen befinden sich in einem horizontalen Verbrennungsschacht der Analysevorrichtung. Die Reaktorgefäße werden entsprechend vertikal oder horizontal in den Ofenraum eingeführt. Der Verbrennungsschacht kann zylindrisch oder, insbesondere bei Aufnahme von mehreren Reaktorgefäßen, rechteckig oder ellipsenförmig ausgebildet sein. Vertikal angeordnete Öfen weisen in ihrem unteren Bereich mindestens einen vertikalen Flammenschacht auf. Horizontal angeordnete Öfen weisen einen oder mehrere vertikale Flammenschächte auf.

Die Wärmezufuhreinrichtung ist in einem Feuerraum, im bodenseitigen Bereich der Analysevorrichtung, angeordnet. Gemäß einer vorteilhaften Ausgestaltung ist sie durch eine Brenneranlage realisiert mit einer Zündflamme und einer Hauptflamme, die aus einer oder mehreren Flammengruppen besteht. Vorzugsweise wird als Hauptflamme eine vorgemischte Flamme eingesetzt, deren kegelige spitze Form und die hohe Temperatur eine gute Anpassung an das kleine Volumen des Feuerraumes und an die hier herrschenden Temperaturverhältnisse mit einer hohen Wärmedichte ermöglichen. Um die Überhitzung der mittleren Bereiche der im Ofen befindlichen Reaktorgefäße gegenüber den kälteren äußeren Zonen zu vermeiden, ist zwischen der kegeligen, vorgemischten Flammspitze und dem zu erwärmenden Reaktorgefäß eine Flammendämmschicht angeordnet.Sie besteht vorteilhafterweise aus einer relativ dünnen, mineralischen Platte und befindet sich unterhalb des Reaktorgefäßes, etwa im Bereich der Flammenspitze. Die Flammendämmschicht ist sowohl bei der horizontalen als auch vertikalen Anordnung des Ofens vorhanden.

Besonders vorteilhaft im Sinne einer kompakten und bedienungsfreundlichen Bauweise ist, daß der Ofen vertikal verschiebbar angeordnet ist, wodurch der Feuerraum bei Zündvorgängen der Flamme oder bei Wartungsarbeiten einfach zugänglich ist.

Durch die zweiflammige Ausbildung der Brennervorrichtung ist die Sicherheit der Analysevorrichtung weitgehend gewährleistet. Während die Zündflamme ständig brennt und die Kontinuität der Feuerführung sichert, wird die Hauptflamme durch Takten z.B. eine Zweipunktregelung und durch kontinuierliche Verstellung des Volumenstromes durch eine Drosselvorrichtung (z.B. ein Magnetventil) bei stetigen Regelungen oder durch ähnliche Anpassung des Gas- oder Luftstromvolumens geregelt. Erlischt aus irgendeinem Grund die Zündflamme, so wird die Brennstoffzufuhr durch eine automatische Sicherung unterbrochen. Die Temperaturregelung im Ofen erfolgt durch Veränderung der Brennstoffzufuhr zur Hauptflamme. Die Anpassung des Brennstoffvolumenstromes erfolgt kontinuierlich oder diskontinuierlich. Soll die Flamme kontinuierlich verändert werden, so kann dies durch die Verstellung des Querschnitts eines Drehventils erreicht werden. Eine Zweipunktregelung erfolgt vorteilhafterweise mit Hilfe eines Magnetventils, wobei der Gasweg auf- und zugemacht wird. Die zur Regelung dieser Vorgänge benötigte elektrische Energie wird durch in der Analysevorrichtung integrierte Batterien geliefert, ihr Verbrauch und ihre Größe sind sehr klein. Die Aufladung dieser Batterien kann vom Netz oder durch Solar- und / oder Windenergie erfolgen. Durch die beschriebene Regelung der Analysevorrichtung ist erreicht, daß Aufheizzeiten innerhalb weniger Minuten exakt erreicht werden können und die Abweichungen vom Temperatursollwert unter einem Prozent liegen. Wichtig ist dabei ein schneller Regelkreis, der Taktfrequenzen im Sekundenbereich verwirklicht. Dafür können schnelle analoge Schaltungen und digitale Regelkreise mit entsprechenden Mikroprozessoren eingesetzt werden.

Vorteilhaft ist, wenn ein aufsteckbarer Schornstein zur Abführung der Abgase vorgesehen ist. Dieser kann im Betriebszustand der Vorrichtung aufgesteckt werden; zum Transport der Vorrichtung wird er abgenommen, um die äußeren Abmessungen klein zu halten. Die Abführung der Abgase erfolgt durch den natürlichen Auftrieb im Schornstein oder sie kann auch mittels Zwangsströmung, z.B. durch ein Gebläse vorgenommen werden. Als Brennstoff für die Brenneranlage können gasförmige und flüssige Energieträger eingesetzt werden, wie Flüssiggas, acetylenhaltige Mischungen, Öl, Benzin oder, für besonders hohe Temperaturen, Wasserstoff. Im Gehäuse der Analysevorrichtung ist ein Druckbehälter mit einem Druckregler für die Brennstoffe integriert.

Mehrere derartige Analysevorrichtungen können zu einer kombinierten Vorrichtung zusammengestellt werden, wodurch gleichzeitig mehrere verfahrenstechnische Schritte miteinander verbunden und somit mehrere Analysen gleichzeitig bzw. eine komplette Analyse, die mehrere Verfahrensschritte erfordert, durchgeführt werden kann.

Die Erfindung wird anhand eines Ausführungsbeispiels, das in den nachfolgenden Figuren dargestellt ist, näher erläutert.

Es zeigen:

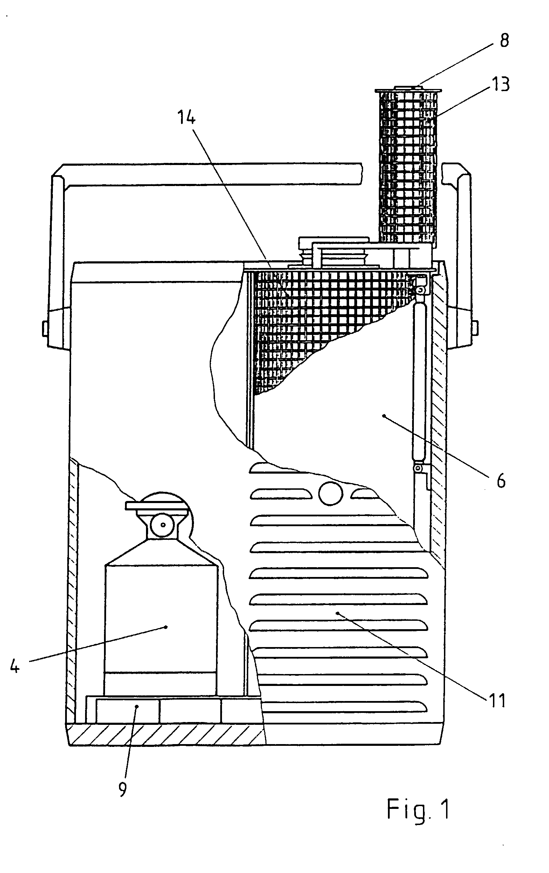

- Fig.1:: Eine teilweise aufgebrochene Ansicht der Analysevorrichtung im Betriebszustand;
- Fig.2:: Eine teilweise aufgebrochene Ansicht der in Fig.1 dargestellten Analysevorrichtung mit nach oben verschobenem Ofen;
- Fig.3:: Eine Draufsicht auf die Analysevorrichtung.
- Fig.4:: Eine Draufsicht auf den Ofenraum mit mehreren Reaktorgefäßen.
- Fig.5:: Eine vergrößerte Darstellung des unteren Reaktorgefäßbereiches.

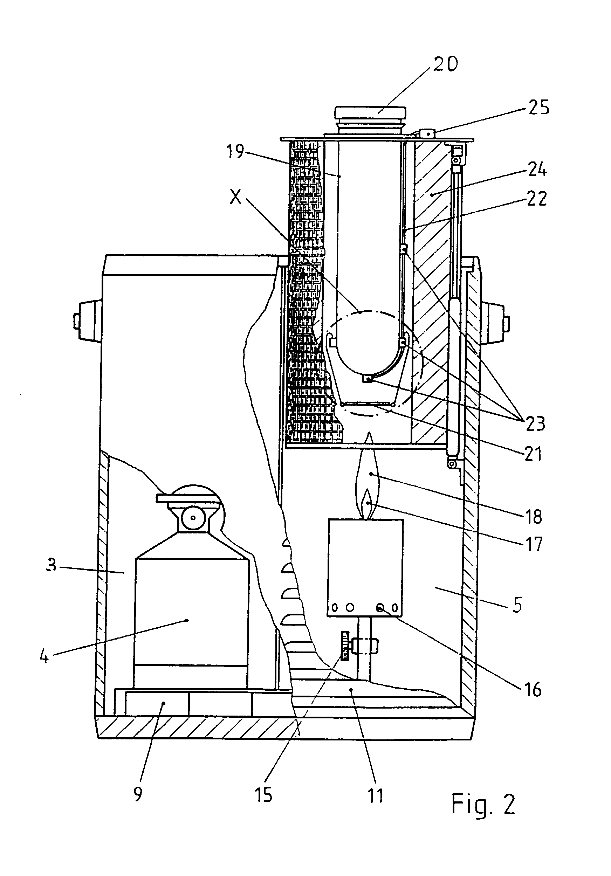

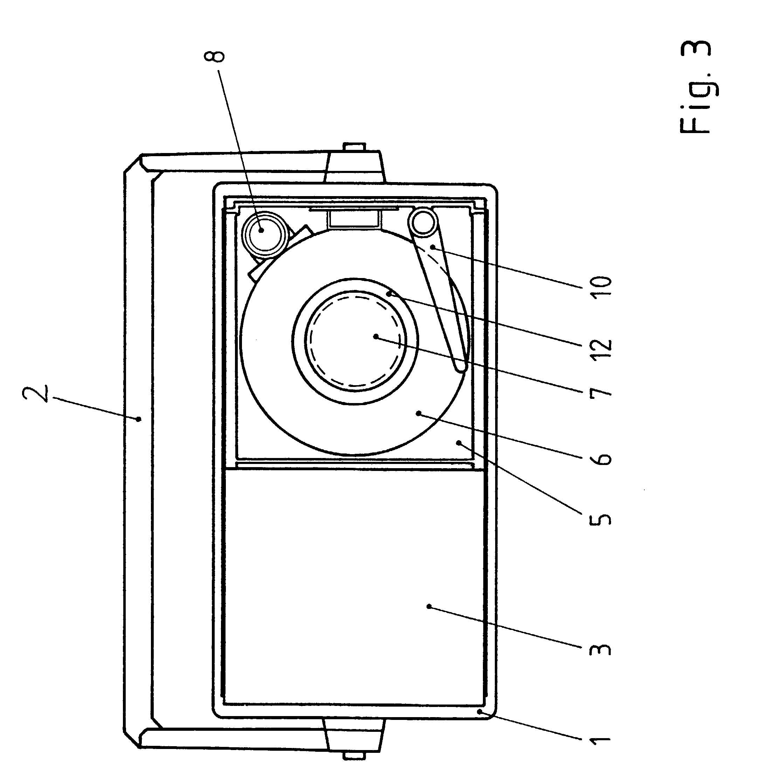

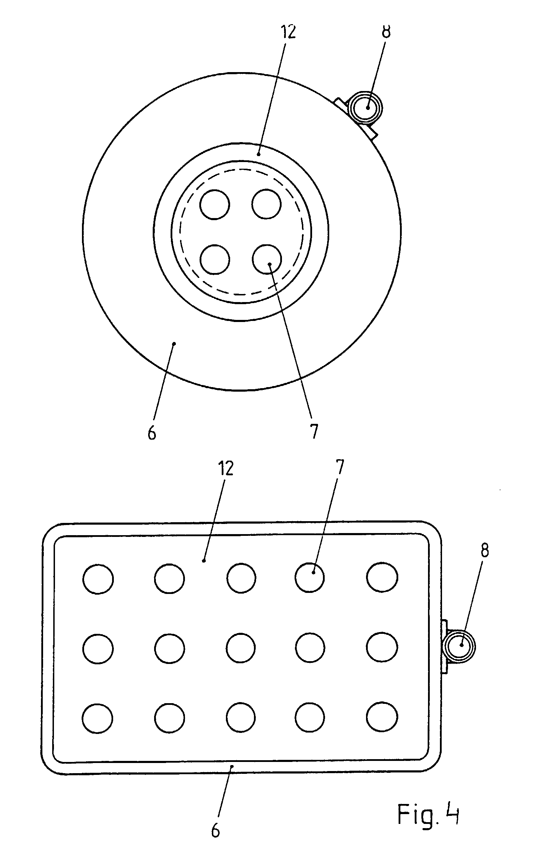

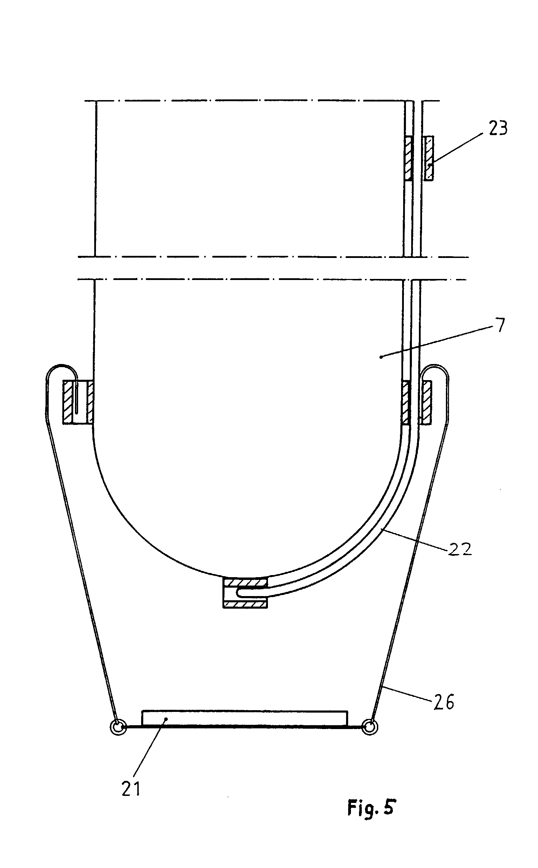

Die Analysevorrichtung weist ein mit einem Tragegriff 2 versehenes Gehäuse 1 auf, in dem ein Raum 3 für einen druckfesten Brennstoffbehälter 4 vorgesehen ist und mit einem Verbrennungsschacht 5, in dem ein Ofen 6 angeordnet ist. In den Ofen 6 sind Reaktorgefäße 7 mit den zu analysierenden Proben einsetzbar. Ferner ist ein aufsteckbarer Schornstein 8 vorgesehen. Der Schornstein 8 ist durch ein Berührungsschutzgitter 13 umgeben. Der Ofen 6 ist ebenfalls mit einem Berührungsschutzgitter 14 umgeben zur Verhinderung von Verbrennungen durch die verhältnismäßig hohen Temperaturen der Ofenwandung 24. Die Ofenwandung 24 weist außenseitig eine Isolierschicht und diese eine Ummantelung aus einem Aluminiumblech auf. Unter dem Brennstoffbehälter 4 sind elektrische Batterien 9 zur Energieversorgung der Regelung der Analysevorrichtung angeordnet. Oberhalb des Verbrennungsschachtes 5 ist ein Hebelarm 10 angeordnet, der den Ofen 6 in einer definierten Höhe gegen Verrutschen sichert. In Fig. 2 ist die Ausführungsform der Analysevorrichtung dargestellt, bei der der Ofen 6 vertikal nach oben herausgeschoben ist. Bei einem nach oben herausgeschobenen Ofen 6 ist ein Feuerraum 11 für Wartungsarbeiten oder Zündvorgänge der Flammen 17,18 einer Brenneranlage besonders gut zugänglich. Zu der Brenneranlage gehört eine Zündflamme und eine Hauptflamme sowie eine Regelung für diese. Die Hauptflamme der Brenneranlage weist einen vorgemischtenFlammenkern 17 und eine Sekundärflamme 18 auf. Die Regelung der Brennstoffzufuhr zu den Flammen erfolgt kontinuierlich oder diskontinuierlich. Für eine Zweipunktregelung ist ein Magnetventil 15 vorgesehen. Ferner sind Öffnungen 16 zum Ansaugen der Verbrennungsluft vorhanden. Zu der Analysevorrfchtung gehören mehrere Reaktorgefäße 7, die vorzugsweise gleiche Form aufweisen und in den Ofenraum 12 zur Durchführung der Analyse einsetzbar sind. In den Ofenraum 12 des Ofens 6 können ein oder mehrere Reaktorgefäße 7 eingesetzt werden (Fig. 4, Fig. 9). Der Ofen 6 und der Ofenraum 12 können zylindrisch oder rechteckig (Fig. 3, Fig. 4) ausgebildet sein. Die Reaktorgefäße 7 bestehen vorzugsweise aus Edelstahl, Glas, Quarzglas, Keramik oder Kunststoff (z.B. Teflon). Sie können mittels eines Deckels 20 luftdicht und druckfest verschlossen werden, was insbesondere bei Aufschlußverfahren notwendig ist. An dem / den Reaktorgefäßen 7 ist ein Thermofühler 22 wie in Fig. 5 dargestell angeordnet. Der Thermofühler 22 ist am Reaktorgefäß 7 über zwei Keramikschutzröhrchen 23 an diesem befestigt. Im oberen Bereich des Ofens 6 befindet sich eine Thermosteckverbindung 25, in die der Thermofühler 22 eingeführt und befestigt wird. Im Bodenbereich des Reaktorgefäßes 7, zwischen diesem und durch die Flammenschächte des Ofens 6 in den Ofenraum 12 durchreichend Flammen ist im Ofenraum 12 eine flammendämmende Schicht 21 in einer Halterung 26 angeordnet.

### Literatur

D1: Portable gas fired art pottery kiln and method. US Patent 3,752,263 vom 14. August 1973

D2: Analytical furnaces. UK Patent Application GB 2116321 A. Prioritätstag: 5. Mai 1982

## Patentansprüche

1. Tragbare Analysevorrichtung für thermische Analysen, insbesondere für TOC-Bestimmungen im Vor-Ort-Bereich,
- mit einem Gehäuse (1), in welchem ein temperaturgeregelter Ofen (6), in den mindestens ein Reaktorgefäß (7) einsetzbar ist,
- eine durch Flammen (17) erzeugte geregelte Wärmezufuhrvorrichtung zur gleichmäßigen Erwärmung der eingesetzten Reaktionsgefäße,
- ein Feuerraum, in dem die Verbennung vonstatten geht,
- ein horizontaler oder vertikaler Verbrennungsschacht (5) angeordnet sind, wobei der Schacht im Ofen je nach Ausführung vertikal oder horizontal zu verschieben ist,
dadurch gekennzeichnet, daß
- die Wärmezufuhrvorrichtung eine Brenneranlage ist, die eine Zündvorrichtung und eine Hauptflamme (17, 18) aufweist, welche aus einer oder mehreren Flammengruppen besteht,
- die Hauptflamme getaktet ist,
- eine flammenhämmende Schicht (21) zwischen der Flammenspitze und dem Reaktor gefäß (7) angeordnet ist,
- ein druckfester Brennstoffbehälter im Gehäuse vorgesehen ist.

2. Tragbare Analysevorrichtung nach Anspruch 1 dadurch gekennzeichnet, daß die Temperaturregelung durch eine kontinuierliche oder diskontinuierliche Regelung der Energiezufuhr der Wärmezufuhrvorrichtung erfolgt.

3. Tragbare Analysevorrichtung nach einem der vorangegangenen Ansprüche dadurch gekennzeichnet, daß ein Miniaturschornstein (8) zur Abführung oder Abgase auf den Mikroofen (6) aufsteckbar ist.

4. Tragbare Analysevorrichtung nach Anspruch 3 dadurch gekennzeichnet, daß ein Gebläse zur Abführung der Abgase vorhanden ist.

5. Tragbare Analysevorrichtung nach Anspruch 1 dadurch gekennzeichnet, daß gasförmige und flüssige Brennstoffe als Energieträger eingesetzt werden.

## Claims

1. Transportable analytical device for carrying out chemical analyses, especially for on-site TOC determinations,
- with a housing (1) containing a temperature-controlled oven (6) in which at least one reactor vessel (7) can be installed,
- a controlled heat supply device generated by flame (17) for evenly heating the installed reactor vessels,
- a combustion chamber in which incineration proceeds,
- a horizontal or vertical incineration shaft (5), with the shaft being adjustable vertically or horizontally in the oven depending on the model,
characterised by the following:
- the heat supply device is a bumer system which includes an ignition component and a main flame (17, 18) consisting of one or more flame groups,
- the main flame is clocked,
- a flame-containing layer (21) is located between the tip of the flame and the reactor vessel (7),
- a pressure-resistant fuel container is planned in the housing.

2. Transportable analytical device as described in Claim 1, characterised by the fact that temperature regulation occurs by continuous or discontinuous control of the energy feed of the heat supply device.

3. Transportable analytical device as described in one of the foregoing Claims, characterised by the fact that a miniature chimney (8) for the expulsion of exhaust vapours can be attached onto the micro-oven (6).

4. Transportable analytical device as described in Claim 3, characterised by the fact that a fan is fitted for extracting the exhaust vapours.

5. Transportable analytical device as described in Claim 1, characterised by the fact that gaseous or liquid fuels are employed as energy sources.

## Revendications

1. Dispositif portable pour analyses chimiques, destiné en particulier aux dosages TOC (total organic carbone) dans le domaine in situ,
- avec un coffret (1) comportant un four réglé en température (6), dans lequel au moins un réacteur (7) peut être inséré,
- un dispositif d'adduction de chaleur régulée et produite par les flammes (17) pour le réchauffement homogène des réacteurs mis en place,
- un foyer dans lequel s'effectue la combustion,
- une chambre de combustion (5) horizontale ou verticale, la chambre dans le four devant être déplacée verticalement ou horizontalement en fonction de la réalisation,
Caractérisé en ce que
- le dispositif d'adduction de chaleur est un brûleur qui comporte un dispositif d'allumage et une flamme principale (17, 18) qui se compose d'un ou plusieurs groupes de flammes,
- la flamme principale est synchronisée,
- une couche ignifuge (21) est disposée entre la pointe de la flamme et le réacteur (7),
- un réservoir de combustible résistant à la pression est prévu dans le coffret.

2. Dispositif d'analyse portable selon la revendication 1, caractérisé en ce que le réglage de la température est un réglage en continu ou en discontinu de l'apport d'énergie du dispositif d'adduction de chaleur.

3. Dispositif d'analyse portable selon une des revendications précédentes, caractérisé en ce que une cheminée miniature (8) servant à l'éduction ou aux gaz d'échappement sur les microfours (6) se relève.

4. Dispositif d'analyse portable selon la revendication 3, caractérisé en ce qu'il dispose d'un ventilateur pour l'éduction des gaz d'échappement.

5. Dispositif d'analyse portable selon la revendication 1, caractérisé en ce que les combustibles employés comme source d'énergie sont gazeux ou liquides.
